# EUROPÄISCHE PATENTSCHRIFT

(11) **EP 2 705 102 B1**
(45) Veröffentlichungstag und Bekanntmachung des Hinweises auf die Patenterteilung: **24.07.2019**
(21) Anmeldenummer: 12720141.6
(22) Anmeldetag: 04.05.2012
(51) Int. Cl.: C09J 5/02, C09J 7/10, C08J 7/12, C09J 133/08

(54) **VERFAHREN ZUR ERHÖHUNG DER ADHÄSIVEN EIGENSCHAFTEN EINER HAFTKLEBEMASSENSCHICHT, DIE EINE OBERE UND EINE UNTERE OBERFLÄCHE AUFWEIST**
METHOD FOR INCREASING THE ADHESIVE PROPERTIES OF A PRESSURE-SENSITIVE ADHESIVE LAYER HAVING AN UPPER AND A LOWER SURFACE
PROCÉDÉ POUR AUGMENTER LE POUVOIR ADHÉSIF D'UNE COUCHE AUTO-ADHÉSIVE PRÉSENTANT UNE SURFACE SUPÉRIEURE ET UNE SURFACE INFÉRIEURE

(30) Priorität: 06.05.2011 DE 102011075468
(43) Veröffentlichungstag der Anmeldung: 12.03.2014
(73) Patentinhaber: tesa SE, 22848 Norderstedt (DE)
(72) Erfinder: NEUHAUS-STEINMETZ, Hermann, 22926 Ahrensburg (DE); SCHÜMANN, Uwe, 25421 Pinneberg (DE); KOOPS, Arne, 23881 Neu-Lankau (DE); SCHUBERT, Thomas, 22850 Norderstedt (DE); KIRPICENOK, Olga, 25474 Ellerbek (DE); WEILAND, Kirstin, 21035 Hamburg (DE); PERLBACH, Dennis, 21629 Neu Wulmstorf (DE); REICH, Sarah, 21259 Otter (DE)
(86) Internationale Anmeldenummer: PCT/EP2012/058282
(87) Internationale Veröffentlichungsnummer: WO 2012/152710

(56) Entgegenhaltungen:
- EP-A1- 1 978 067
- EP-A2- 2 305 389
- WO-A1-96/06736
- WO-A1-03/020517
- WO-A1-2006/027389
- DE-A1- 4 127 723
- DE-A1- 19 649 204
- DE-A1-102006 057 800
- JP-A- 2000 256 625
- US-A- 5 702 771
- US-A1- 2010 151 236

## Beschreibung

Die Erfindung bezieht sich auf ein Verfahren zur Erhöhung der Klebkraft einer Haftklebemassenschicht, die eine obere und eine untere Oberfläche aufweist.

Stoffe mit für Haftklebeanwendungen geeigneten viskoelastischen Eigenschaften zeichnen sich dadurch aus, dass sie bei mechanischer Deformation sowohl viskos fließen als auch elastische Rückstellkräfte aufbauen. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Stoffes als auch von der Geschwindigkeit und Dauer der Deformation sowie von der Temperatur.

Um eine hinreichende Kohäsion der Haftklebemassen der Klebebänder zu erreichen, werden die Haftklebemassen in der Regel vernetzt, das heißt, die einzelnen Makromoleküle werden durch Brückenbindungen miteinander verknüpft. Die Vernetzung kann auf unterschiedliche Weisen geschehen, so gibt es physikalische, chemische oder thermische Vernetzungsmethoden.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Eigenklebrigkeit (auch als Haftklebrigkeit oder als Tack bezeichnet) und damit oft auch zu einer hohen Klebkraft. Stark vernetzte Systeme, kristalline oder glasartig erstarrte Polymere sind mangels fließfähiger Anteile in der Regel nicht eigenklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Um ein Abfließen (ein Herunterlaufen) der Haftklebemassen vom Substrat zu verhindern und eine genügende Stabilität der Haftklebemasse im Klebeverbund zu garantieren, ist also eine hinreichende Kohäsion der Haftklebemassen erforderlich. Für gute Adhäsionseigenschaften müssen die Haftklebemassen aber andererseits in der Lage sein, auf das Substrat aufzufließen und eine hinreichende Benetzung der Substratoberfläche zu garantieren. Um Brüche innerhalb der Verklebungsfuge (innerhalb der Haftklebemassenschicht) zu vermeiden, ist zudem eine gewisse Elastizität der Haftklebemasse erforderlich.

Weiterhin ist für die Adhäsion neben der Benetzung der Oberfläche auch die Art der Wechselwirkung wichtig, also die spezifische Wechselwirkungsenergie der Grenzflächen von Klebmasse und Substrat. Dies ist durch die chemische Natur der Oberflächen dominiert. Haftklebemassen müssen hier einen Konflikt zwischen ihrer Rheologie, also den Eigenschaften ihres Volumens, und ihrem Haftvermögen, also einer Mischung aus Volumen- und Oberflächeneigenschaften, bewältigen.

Für die Verwendung beispielsweise in der Automobilindustrie und Elektronikindustrie werden an Selbstklebebänder hohe Leistungsanforderungen gestellt. Wichtige Kriterien beinhalten hierbei eine gute Verklebungsfestigkeit, insbesondere eine hohe Scherfestigkeit, eine hohe Alterungsbeständigkeit und nicht zuletzt die elektronische Verträglichkeit. Für entsprechende Anwendungen werden daher vornehmlich Selbstklebebänder auf Basis von hochvernetzten Polyacrylatklebmassen genutzt. Sehr oft werden beidseitig klebende Klebebänder zur meist permanenten Verbindung von Bauteilen benutzt.

Solch doppelseitig klebende Selbstklebebänder werden vielfältig zum Fixieren und zum Verbinden von verschiedensten Materialien verwendet. So werden heute eine Vielzahl von unterschiedlichen Selbstklebbändern in der Automobilindustrie zum Beispiel zum Verkleben von Tür- und Zierleisten und in der Elektronikindustrie zum Beispiel zum Verkleben von Displays, Batterien oder Lautsprechern unter anderem in mobilen Telefonen, Digitalkameras oder Pocket-Computern eingesetzt. Durch die Verwendung von Haftklebebändern können die einzelnen technischen Bauteile Platz sparender, deutlich schneller und damit effizienter und kostengünstiger montiert werden.

Für diverse Anwendungsgebiete, wie beispielsweise im Bausektor, in der industriellen Fertigung von technischen Produkten oder für Montagezwecke, werden zunehmend dicke, aber stark klebende Klebebänder benötigt. Da die Verklebungen häufig im Außenbereich stattfinden beziehungsweise die verklebten Produkte den äußeren Witterungseinflüssen ausgesetzt sind, sind die Erwartungen an die Eigenschaften derartiger Klebebänder häufig hoch: so soll die Verklebung stark, dauerhaft und witterungsbeständig sein; gefordert wird vielfach eine hohe Feuchtigkeits-, Wärme- und Feuchtwärmebeständigkeit; vorteilhaft sollten die Klebebänder Unebenheiten in der Verklebungsfuge beziehungsweise auf den zu verklebenden Untergründen ausgleichen können, und zunehmend wird auch für dicke Klebebänder eine hohe Transparenz gewünscht (etwa im Bereich der Verklebung von transparenten Materialien wie Gläsern oder Transparenz-Kunststoffen). Auch hier ist die Verwendung von hochvernetzten Polyacrylatklebmassen üblich.

Die Klebebänder, die für derartige Zwecke eingesetzt werden, sind für gewöhnlich mit Klebemassen ausgerüstet, bei denen die klebtechnischen Eigenschaften besonders gut abgestimmt sein müssen. So müssen Kohäsion, Anfassklebrigkeit (auch als "Tack" bezeichnet), Fließverhalten und andere Eigenschaften sehr genau justiert werden. Da die technischen Ausformungen der Haftklebemasse, die diese Eigenschaften beeinflussen, auf die einzelnen Eigenschaften häufig gegenläufige Auswirkungen haben, ist die Abstimmung in der Regel schwierig, oder es müssen Kompromisse im Ergebnis hingenommen werden. So ist es beispielsweise problematisch, besonders scherfeste Klebmassen zusätzlich auf Adhäsion zu optimieren.

Die Problematik der mangelnden Adhäsion stark vernetzter Acrylatklebemassen zeigt sich beispielsweise auch bei der Laminierung mehrlagiger Klebebänder. Eine solche Laminierung funktioniert recht gut bei nicht vernetzten Haftklebmassen wie zum Beispiel Klebmassen auf Basis von Polyisobutylen, physikalisch vernetzten Haftklebmassen wie zum Beispiel Klebmassen auf Basis von Styrol-Block-Copolymeren, insbesondere wenn hier die Laminierung bei erhöhter Temperatur erfolgt, oder wenig vernetzten Haftklebemassen wie zum Beispiel Klebmassen auf Basis von gering vernetztem Naturkautschuk. Die Laminierung vernetzter Acrylat-Haftklebmassen-Schichten führt hingegen häufig zu einem Laminat mit einem verminderten Eigenschaftsprofil aufgrund geringer Kaschier- beziehungsweise Verbundfestigkeit der Schichten. Vermutet wird, dass die Polymerketten der Acrylat-Haftklebemasse aufgrund eines hohen Vernetzungsgrades nicht fähig sind, Verschlaufungen genügender Länge an der Grenzfläche zu bilden. Dieser Umstand wird sogar bei einigen Produkten gezielt genutzt, um ein doppelseitiges Selbstklebeband ohne Trennmaterial (Trennpapier oder Trennfolie) als Rollenware anzubieten, so dass zwei Lagen der Polyacrylat-Haftklebemasseschicht direkt in dauerhaften Kontakt kommen. Das Abwickeln dieser Produkte ist auch noch nach Jahren der Lagerung ohne Probleme möglich. tesafix® 56661 ist ein Beispiel für ein solches Produkt.

Insbesondere für den Bereich der Hochleistungs- und Montageklebebänder gibt es trägerlose, viskoelastische Klebebänder. "Trägerlos" bedeutet in diesem Zusammenhang, dass keine Schicht nur für den strukturellen Zusammenhalt nötig ist, das Klebeband ist also für den spezifizierten Einsatz in sich ausreichend kohäsiv. Es ist nicht nötig, eine Trägerfolie oder ähnliches, wie Vlies oder Gewebe, zu verwenden. Auch diese Klebebänder basieren meist auf hochvernetzten Acrylatklebemassen. Des Weiteren sind diese Haftklebebänder meistens verhältnismäßig dick, typischerweise über 300 µm.

Eine so bezeichnete viskoelastische Polymerschicht kann als sehr hochviskose Flüssigkeit angesehen werden, die unter Druckbelastung das Verhalten des Fließens (auch als "Kriechen" bezeichnet) zeigt. Solche viskoelastischen Polymere beziehungsweise eine solche Polymerschicht besitzen in besonderem Maße die Fähigkeit, bei langsamer Krafteinwirkung die auf sie einwirkenden Kräfte zu relaxieren: sie sind in der Lage, die Kräfte in Schwingungen und/oder Verformungen (die insbesondere auch - zumindest zum Teil - reversibel sein können) zu dissipieren, somit die einwirkenden Kräfte "abzupuffern", und eine mechanische Zerstörung durch die einwirkenden Kräfte bevorzugt zu vermeiden, vorteilhaft aber mindestens zu verringern oder aber den Zeitpunkt des Eintretens der Zerstörung zumindest hinauszögern. Im Falle einer sehr schnell einwirkenden Kraft zeigen viskoelastische Polymere üblicherweise ein elastisches Verhalten, also das Verhalten einer vollständig reversiblen Verformung, wobei Kräfte, die über das Elastizitätsvermögen der Polymere hinausgehen, zu einem Bruch führen können. Im Gegensatz hierzu stehen elastische Materialien, die auch bei langsamer Krafteinwirkung das beschriebene elastische Verhalten zeigen. Durch Beimischungen, Füllstoffe, Schäumung oder ähnliches können solche viskoelastischen Klebmassen in ihren Eigenschaften noch stark variiert werden.

Aufgrund der elastischen Anteile der viskoelastischen Polymerschicht, die wiederum wesentlich zu den klebtechnischen Eigenschaften von Klebebändern mit solch einer viskoelastischen Trägerschicht beitragen, kann die Spannung zum Beispiel einer Zug- oder Scherbeanspruchung nicht komplett relaxieren. Dies wir durch das Relaxationsvermögen ausgedrückt, welches definiert ist als ((Spannung(t=0) - Spannung (t)/ Spannung (t=0))^{∗}100%. Typischerweise zeigen viskoelastische Trägerschichten ein Relaxationsvermögen von mehr als 50 % auf.

Wiewohl jede Klebmasse viskoelastischer Natur ist, werden für trägerlose Hochleistungs-Klebebänder bevorzugt Klebmassen eingesetzt, welche diesen besonderen Relaxierungseigenschaften zeigen.

Bei der Entwicklung von Klebmassen führt die Erzielung dieser besonderen Relaxierungseigenschaften bei Beibehaltung hoher Kohäsion oft zu Kompromissen mit niedriger Adhäsion und dadurch niedriger Klebkraft. Aufgrund der nötigen hohen Kohäsion ist es alles andere als trivial, scherfeste trägerlose viskoelastische Klebebänder mit hoher Adhäsion und/oder Tack herzustellen. Es zeigt sich, dass ohne den Zusatz von Klebharzen, wie sonst bei Klebmassen üblich, die Adhäsion oft unzureichend bleibt. Die Beimischung solcher Harze geht, wie jedem Fachmann bekannt, auf Kosten der Scherfestigkeit, was jedoch für Hochleistungsanwendungen unbedingt zu vermeiden ist.

Jedoch ist der Übergang zu "konventionellen" Klebemassen grundsätzlich fließend, insbesondere zu Transferklebebändern, und dadurch ebenso zu Klebemassen, welche typischerweise mit Trägern eingesetzt werden. Beispielsweise spricht nichts dagegen, eine als insbesondere "viskoelastisch" bezeichnete Klebmasse auch in dünner Schicht in einem konventionellen Klebeband mit Träger einzusetzen. Umgekehrt kann eine "konventionelle" Klebmasse auch in einem Dickschichtprodukt in einigen Fällen sinnvoll sein oder kann durch Beimischungen, Füllstoffe, Schäumung oder ähnlichem auf einen gegebenen Zweck hinreichend optimiert werden.

Bei vielen Verklebungen auf realen Oberflächen ist es zudem in der Praxis oft nötig, einen Haftvermittler, auch Primer genannt, auf die Oberfläche aufzutragen. Falls die Oberfläche verschmutzt oder verölt ist, kann ein Primer zusammen mit einer Reinigung oder physikalischen Vorbehandlung der Oberfläche eine hinreichende Verklebung ermöglichen. Für eine physikalische Oberflächenbehandlung werden regelmäßig Plasmasysteme eingesetzt, oft in Düsengeometrie und bei Normaldruck. Der Einsatz eines Primers ist aus Gründen der Komplexität und des problematischen Auftrags meist nicht wünschenswert.

In der Vergangenheit konnten in manchen Fällen die Verbesserung einige Oberflächeneigenschaften einer Haftklebemasse durch "Aktivierung" ihrer Oberfläche gezeigt werden. Welche Eigenschaften dies sind und wie eine solche Verbesserung aussieht, kann sich sehr unterscheiden.

Der Begriff "Aktivierung" wird in dieser Offenbarung synonym für alle Varianten von Modifikation verwendet, die nur die Oberfläche betreffen und positiven Einfluss auf die Adhäsionseigenschaften haben. Hauptsächlich kommen dafür physikalische Methoden wie Corona, Plasma und Flamme in Frage. Der Begriff "Aktivierung" impliziert meist eine unspezifische Modifikation.

Sehr überwiegend wird nur der Verklebungsuntergrund/das Substrat behandelt und nicht der (Haft)klebestoff. Zur Aktivierung von Klebmasseoberflächen gibt es grundsätzlich schon Stand der Technik, jedoch nicht besonders umfassend.

Die DE 10 2007 063 021 A1 beschreibt eine Corona-Aktivierung von Klebmassen zur Erhöhung der Scherstandzeiten. Beschrieben wird insbesondere das Problem, dass bei UV-vernetzten Haftklebemassen ein Vernetzungsprofil auftritt mit erhöhter Vernetzung nahe der Grenzfläche mit dadurch reduzierter Adhäsion. Gelehrt wird die Steigerung der Scherfestigkeit durch eine Coronabehandlung, bei ansonsten praktisch gleichbleibenden klebtechnischen Eigenschaften, auch unveränderter oder sogar reduzierter Klebkraft.

Dem Fachmann ist es klar, dass durch Erhöhung der SSZ nicht trivialerweise auch eine Erhöhung der Klebkraft erreicht wird.

Des Weiteren wird in der DE 10 2006 057 800 A1 gelehrt, wie durch Aktivierung von Klebmassenoberflächen vor Laminierung in einem mehrlagigen Klebeband eine Erhöhung der Scherfestigkeit erreicht wird. Die Behandlung erfolgt auf Grenzflächen innerhalb des Produkts und dient zur Erhöhung der Interlaminathaftung. Es wird keine Erhöhung der Klebkraft des gelehrten Klebebandes nachgewiesen.

Die bisherigen im Stand der Technik gelehrten Lösungen zur Erhöhung der Klebkraft einer ausgeformten viskoelastischen Haftklebeschicht beziehen sich auf das Hinzukaschieren ein oder mehrerer Schichten einer Klebmasse, so dass man einen mehrschichtigen Aufbau erhält.

WO 2006/027389 A1 lehrt einen solchen Mehrschichtaufbau, wobei vorteilhafterweise die einzelnen Schichten corona-behandelt werden. Es wird ein dreischichtiger Aufbau beschrieben aus Schichten, die jeweils unter 10 N/cm Klebkraft haben, insbesondere unter 7 N/cm, wobei jedoch der Dreischichtaufbau eine Klebkraft von größer 10 N/cm aufweist.

Die offensichtlichen Nachteile eines Mehrschichtaufbaus sind der erhöhte Aufwand bei der Fertigung und die Anzahl der Prozessschritte. Bei dieser Art der Lösung können grundsätzlich Delaminationsprobleme zwischen den Schichten auftreten, da die Interlaminathaftung nicht auf starken kovalenten chemischen Wechselwirkungen beruht, sondern auf unspezifischen Wechselwirkungen allgemeiner polarer Natur.

Eine Verbesserung der Interlaminathaftung in einem solchen Mehrschichtaufbau mit einem viskoelastischen Träger wird in EP 2 062 951 A1 beschrieben, wo der Effekt einer Corona-Behandlung der Klebmasseoberfläche mit den chemischen Nachreaktionen einer thermischen Vernetzung kombiniert wird. Jedoch bleiben die Nachteile der erhöhten Komplexität eines Mehrschichtaufbaus wie oben beschrieben. Zudem ist es nicht auszuschließen, dass durch Diffusion des eingesetzten Vernetzers Nachvernetzungsreaktionen auch die Eigenschaften der zukaschierten Klebmasse ungünstig verändern.

Aus der JP 2000 256 625 A ist ein Verfahren bekannt, bei dem die beiden Oberflächen einer Haftklebemassenschicht behandelt werden. Eine weitere Behandlung des Untergrunds wird nicht erwähnt.

Aus der US 2010/151236 A1 ist ein Verfahren zur Erhöhung der Adhäsion zwischen einer Haftklebemassenschicht, die eine einem Substrat abgewandte und eine dem Substrat zugewandte Oberfläche aufweist, und der Oberfläche eines Substrats bekannt, wobei die dem Substrat zugewandte Oberfläche der Haftklebemassenschicht und die Oberfläche des Substrats, die mit der Haftklebemassenschicht bedeckt ist, jeweils mit Atmosphärendruckplasma behandelt werden.

Die Aufgabe dieser Erfindung ist es, ein Verfahren anzugeben, mit dem die Klebkraft einer Haftklebemassenschicht erhöht werden kann. Insbesondere ist diese Aufgabe zu lösen für viskoelastische trägerlose Haftklebebänder mit hohen klebtechnischen Anforderungen insbesondere an die Scherfestigkeit. Eine weitere Aufgabe ist es, ein beidseitig klebendes Klebeband bereitzustellen, welches durch physikalische Behandlung ungleiche Klebkräfte der beiden Seiten besitzt ("abgestuft"). Zudem soll ein Klebeband bereitgestellt werden, das durch physikalische Behandlung seiner Oberfläche auch ohne Auftrag eines Primers auf den Untergrund eine so große Adhäsion beziehungsweise Klebkraft erreicht, dass bei Entfernen des Klebebands (beispielsweise in Bruch- oder Schälversuchen) kohäsives, statt adhäsives, Versagen auftritt.

Gelöst werden diese Aufgaben durch ein Verfahren, wie es gemäß Hauptanspruch dargestellt ist. Gegenstand der Unteransprüche sind dabei vorteilhafte Weiterbildungen des Verfahrens.

Demgemäß betrifft die Erfindung ein Verfahren zur Erhöhung der Klebkraft einer Haftklebemassenschicht, die eine obere und eine untere Oberfläche aufweist, wobei beide Oberflächen der Haftklebemassenschicht einer physikalischen Methode unterzogen werden, wobei die physikalische Methode gewählt wird aus der Gruppe Corona-Entladung oder Plasmabehandlung, wobei beide Oberflächen der Haftklebemassenschicht einer physikalischen Methode derart unterzogen werden, dass sich ungleiche Klebkräfte auf beiden Seiten einstellen, wobei zusätzlich das Substrat, auf das die Haftklebemassenschicht verklebt wird, physikalisch durch Plasma vorbehandelt ist, wobei das Substrat ein Untergrund aus Stahl oder ein anderes Metall oder Glas oder Keramik ist.

Die angegebenen Aufgaben werden also gelöst durch eine physikalische Behandlung der Klebmasseoberfläche, insbesondere einer Plasmabehandlung, also durch eine gezielte Modifizierung der Grenzfläche ohne Veränderung der Volumeneigenschaften. Es wird ein beidseitig klebendes Klebeband bereitgestellt, welches ohne Hinzukaschieren weiterer Schichten eine gesteigerte Klebkraft besitzt.

Besonders bevorzugt wird als physikalische Methode eine Plasmabehandlung bei oder nahe bei Atmosphärendruck. Unter "nahe bei" wird dabei eine Abweichung von wenigen Prozent vom Atmosphärendruck (nach oben oder unten) verstanden, insbesondere weniger als 10 %, bevorzugt weniger als 5 %, besonders bevorzugt weniger als 2 %.

Diese gesteigerte Klebkraft übertrifft jene, welche aus den rheologischen beziehungsweise Volumeneigenschaften zu erwarten wäre. Wie der Fachmann weiß, unterscheiden sich absolut gemessene Klebkraftwerte stark durch Dicke, Aufziehzeit, Andruck und weitere. Deswegen ist im Sinne dieser Erfindung eine Steigerung der Klebkraft nicht im Sinne eines absoluten Wertes, beispielsweise in N/cm, zu sehen, sondern als ein Verhältnis zu einer vergleichbaren unbehandelten Oberfläche. Insbesondere ist ein "Vorher/Nachher"-Verhältnis der Klebkräfte derselben Oberfläche sinnvoll. Die Steigerung der Klebkraft im Sinne dieser Erfindung ist signifikant, typischerweise größer als 20 %.

Überraschenderweise wird auch bei sehr polaren Klebmassen eine Steigerung der Klebkraft nach einer physikalischen Vorbehandlung beobachtet. So kann selbst bei einer Reinacrylatklebmasse mit einem Acrylsäureanteil von 12 Gew.-% eine signifikante Steigerung der Klebkraft beobachtet werden. Auch überraschend ist die Steigerung der Klebkraft harzabgemischter Klebmassen durch eine physikalische Vorbehandlung. Trotz eines Harzanteils von 30 % oder mehr kann eine signifikante Steigerung der Klebkraft beobachtet werden. Auch wurde überraschend festgestellt, dass die Klebkraft gegenüber hochenergetischen Substraten (wie Stahl) gesteigert werden konnte.

Damit kann ein Klebeband bereitgestellt werden, welches durch physikalische Vorbehandlung eine gegenüber vielfältigen Substraten gesteigerte Klebkraft besitzt. Insbesondere kann ein beidseitig klebendes Klebeband mit abgestuften Klebkräften der offenen und abgedeckten Seite bereitgestellt werden, ohne Hinzukaschieren weiterer Schichten.

Abgestufte Klebkräfte beziehungsweise ein Klebeband mit abgestuften Klebkräften sind interessant für beispielsweise einen Einsatz bei dem ein gezieltes Öffnen einer Klebeverbindung ab einer definierten Kraftschwelle gewünscht ist. Bei gezielt eingestelltem Ablösen oder Öffnen einer Verbindung kann dann auch sichergestellt werden, dass die Klebmasseschichten auf den gewünschten Substraten verbleiben. Eine beliebig geringe Abstufung kann im Einzelfall sinnvoll sein.

Eine physikalische Methode im Sinne dieser Erfindung ist eine Methode, welche durch elektrische Entladungen ein Plasma erzeugt und das zu behandelnde Substrat diesem Plasma ausgesetzt wird.

Im Sinne dieser Erfindung findet die Behandlung bei einem Druck statt, welcher nahe am oder bei Atmosphärendruck liegt. Die mittlere Elektronengeschwindigkeit im Plasma liegt meist sehr hoch, wobei ihre mittlere kinetische Energie deutlich höher als die der Ionen. Mithin ist eine über diese Energie definierte Elektronentemperatur verschieden von der Temperatur der Ionen, und das Plasma ist nicht im thermischen Gleichgewicht: es ist "kalt".

Die üblicherweise als "Corona" bezeichnete physikalische Vorbehandlungstechnik ist meist eine "dielektrische Barrierenentladung" (engl. *dielectric barrier discharge,* DBD). Siehe dazu auch Wagner et al., Vacuum, 71 (2003), 417-436. Dabei wird das zu behandelnde Substrat bahnförmig zwischen zwei Hochspannungselektroden durchgeführt, wobei mindestens eine Elektrode aus einem dielektrischen Material besteht oder damit beschichtet ist. Die Behandlungsintensität einer Coronabehandlung wird als "Dosis" in [Wmin/m²] angegeben, mit der Dosis D=P/b^{∗}v, mit P=elektrischer Leistung [W], b=Elektrodenbreite [m], und v=Bahngeschwindigkeit [m/min].

Durch eine geeignet hohe Bahnspannung wird das Substrat auf die als Walze ausgeführte Gegenelektrode gepresst, um Lufteinschlüsse zu verhindern. Der Behandlungsabstand ist typischerweise ca. 1 bis 2 mm. Ein grundsätzlicher Nachteil einer solchen Zwei-Elektroden-Geometrie mit einer Behandlung im Raum zwischen Elektrode und Gegenelektrode ist die mögliche Rückseitenbehandlung. Bei kleinsten Luft- oder Gaseinschlüssen auf der Rückseite, beispielsweise wenn die Bahnspannung bei einer Rolle-zu-Rolle-Behandlung zu gering ist, findet eine meist ungewünschte Corona-Behandlung der Rückseite statt.

Bei der Behandlung mit der hochfrequenten Wechselspannung im kV-Bereich entstehen kurzzeitig diskrete Entladungskanäle zwischen Elektrode und Substrat, wobei auch beschleunigte Elektronen auf die Oberfläche des Substrats treffen. Beim Auftreffen der Elektronen kann die Energie das Zwei- bis Dreifache der Bindungsenergie der meisten molekularen Bindungen eines Kunststoffsubstrats betragen und damit diese aufbrechen.

Durch Sekundärreaktionen entstehen funktionelle und polare Gruppen in der Oberfläche. Die Entstehung von polaren Gruppen trägt beispielsweise stark zur Steigerung der Oberflächenenergie bei. Durch die Wirkung der energiereichen beschleunigten Elektronen ist eine solche Behandlung sehr effizient bezogen auf die eingesetzte elektrische Energie, und sehr leistungsfähig bezogen auf die möglichen ausgelösten Reaktionen. Die Erzeugung einer hohen Dichte von polaren und funktionellen Gruppen steht dabei allerdings im Wettbewerb mit dem Abbau von Material durch Kettenbrüche und Oxidation.

Die einfache Coronabehandlung oder DBD wird üblicherweise zur Behandlung von unpolaren Oberflächen und Folien verwendet, damit deren Oberflächenenergie und Benetzbarkeit steigt. So werden Kunststofffolien vor dem Bedrucken oder dem Aufbringen von Klebemassen oft einer Coronabehandlung unterzogen.

Obwohl im weiteren Sinn eine Corona-Behandlung in Luft eine Technik ist, in der Plasma eine Rolle spielt, wird unter einer Plasmabehandlung bei Atmosphärendruck üblicherweise eine engere Definition verstanden.

Wenn eine Corona-Behandlung statt in Luft in einer anderen Gasmischung, zum Beispiel auf Stickstoffbasis, stattfindet, wird zwar teilweise schon von Plasma gesprochen. Eine Plasmabehandlung bei Atmosphärendruck im engeren Sinn ist jedoch eine homogene und entladungsfreie Behandlung. Beispielsweise kann durch Einsatz von Edelgasen, teils mit Beimischungen, ein solch homogenes Plasma erzeugt werden. Dabei findet die Behandlung in einem flächigen homogen mit Plasma gefüllten Reaktionsraum statt.

Das reaktive Plasma enthält Radikale und freie Elektronen, welche schnell mit vielen chemischen Gruppen in der Substratoberfläche reagieren können. Dies führt zur Entstehung von gasförmigen Reaktionsprodukten und hoch reaktiven, freien Radikalen in der Oberfläche. Diese freien Radikale können durch Sekundärreaktionen mit Sauerstoff oder anderen Gasen rasch weiterreagieren und bilden verschiedene chemische Funktionsgruppen auf der Substratoberfläche. Wie bei allen Plasmatechniken steht die Erzeugung von funktionellen Gruppen im Wettbewerb mit dem Materialabbau.

Das zu behandelnde Substrat kann statt dem Reaktionsraum einer Zwei-Elektroden-Geometrie auch nur dem entladungsfreien Plasma ausgesetzt werden ("indirektes" Plasma). Das Plasma ist dann meist auch in guter Näherung potentialfrei. Das Plasma wird dabei meist durch einen Gasstrom von der Entladungszone fortgetrieben und nach kurzer Strecke auf das Substrat geleitet, ohne dass eine Gegenelektrode benötigt wird. Die Lebenszeit (und damit auch die nutzbare Strecke) des reaktiven Plasmas, oft "afterglow" genannt, wird durch die genauen Details der Rekombinationsreaktionen und der Plasmachemie bestimmt. Meist wird ein exponentielles Abklingen der Reaktivität mit dem Abstand von der Entladungsquelle beobachtet.

Moderne indirekte Plasmatechniken basieren oft auf einem Düsenprinzip. Hierbei kann die Düse rund oder linienförmig ausgeführt sein, teilweise wird mit Rotationsdüsen gearbeitet, ohne hier eine Einschränkung vornehmen zu wollen. Ein solches Düsenprinzip ist vorteilhaft aufgrund seiner Flexibilität und seiner inhärent einseitigen Behandlung. Solche Düsen, beispielsweise der Firma Plasmatreat, sind industriell weit verbreitet zur Vorbehandlung von Untergründen vor einer Verklebung. Nachteilig sind die indirekte und weniger effiziente da entladungsfreie Behandlung, und dadurch die reduzierten Bahngeschwindigkeiten. Die übliche Bauform einer Runddüse ist jedoch besonders gut geeignet schmale Warenbahnen zu behandeln, wie beispielsweise ein Klebeband mit einer Breite von wenigen cm.

Es sind verschiedene Plasmaerzeuger auf dem Markt, die sich in der Technik zur Plasmaerzeugung, der Düsengeometrie und der Gasatmosphäre unterscheiden. Obwohl sich die Behandlungen unter anderem in der Effizienz unterscheiden, sind die grundsätzlichen Effekte meist ähnlich und sind vor allem durch die eingesetzte Gasatmosphäre bestimmt. Eine Plasma-Behandlung kann in verschiedenen Atmosphären stattfinden, wobei die Atmosphäre auch Luft umfassen kann. Die Behandlungsatmosphäre kann eine Mischung verschiedener Gase sein, ausgewählt unter anderem aus N₂, O₂, H₂, CO₂, Ar, He, Ammoniak, wobei zudem Wasserdampf oder andere Bestandteile beigemischt sein können. Durch diese beispielhafte Auflistung wird keine Einschränkung vorgenommen.

Grundsätzlich kann man der Atmosphäre auch beschichtende oder polymerisierende Bestandteile beimischen, als Gas (zum Beispiel Ethylen) oder Flüssigkeiten (vernebelt als Aerosol). Es ist fast keine Einschränkung der in Frage kommenden Aerosole gegeben. Besonders die indirekt arbeitenden Plasmatechniken sind für den Einsatz von Aerosolen geeignet, da hier keine Verschmutzung der Elektroden droht.

Da die Effekte einer Plasmabehandlung chemischer Natur sind und eine Veränderung der Oberflächenchemie im Vordergrund steht, kann man die oben beschriebenen Methoden auch als chemisch-physikalische Behandlungsmethoden beschreiben. Grundsätzlich ist es nun für den Fachmann überraschend, dass durch die Behandlung einer Klebmassenoberfläche mit einer physikalischen oder chemisch-physikalischen Methode eine Steigerung der Klebkraft erreicht werden kann. Da der Fachmann erwartet, dass alle diese Methoden mit Kettenbrüchen und einem Materialabbau einhergehen, würde die Bildung einer Bildung einer Schicht mit hohem Gehalt an polaren Gruppen aber geringem innerem Zusammenhalt erwartet. Durch die schwach kohäsive Schicht mit erhöhter Polarität ist eine bessere Benetzung des Substrats durch die Klebmasse nicht überraschend, es werden jedoch reduzierte Adhäsionseigenschaften erwartet. Dass beispielsweise in der DE 10 2006 057 800 A1 durch Corona-Behandlung einer Klebmasseoberfläche keine Steigerung der Klebkraft gelehrt wird, ist in diesem Zusammenhang zu sehen.

Es ist zudem für den Fachmann überraschend, dass bei einer Behandlung einer Klebmassenoberfläche mit einem indirekten Plasma ein Effekt erzielt werden kann, also eine Steigerung der Klebkraft, welcher mit einer Coronabehandlung vergleichbar ist oder diese sogar übertrifft.

Überraschenderweise kann eine geeignete Plasmabehandlung der Klebmasse vor Applikation sogar die Verwendung eines Haftvermittlers oder Primers überflüssig machen. Der Verzicht auf Primer ist aus verschieden Gründen vorteilhaft, vor allem um Komplexität und Aufwand zu reduzieren.

Im Sinne dieser Offenbarung ist es jedoch auch möglich, das Verklebungssubstrat ebenfalls einer physikalischen Behandlung zu unterziehen. Dies kann zur Reinigung des Substrats dienen, aber vor allem auch um eine spezifische Oberflächenmodifikation zu erzeugen, welche einer weiteren Steigerung der Klebkraft dient. Die Vorbehandlung muss nicht zwingend die gleiche sein, welche für das Klebeband verwendet wird. So kann das Klebeband beispielsweise einer Behandlung mit einem Stickstoff-Plasma unterzogen werden, wobei das Substrat, zum Beispiel Stahl, einer Behandlung mit einem Sauerstoff-Plasma unterzogen wird. Beide Behandlungen können vorteilhaft mit einer indirekten Düsentechnik ausgeführt werden.

Die Klebebänder mit durch physikalischer Behandlung gesteigerter Klebkraft im Sinne dieser Erfindung sind unter anderem geeignet zur Verwendung in permanenten Verklebungen, insbesondere Hochleistungs- und Montageanwendungen.

Diese Klebbänder sind allerdings auch zur Weiterverabeitung geeignet, zum Beispiel zur Verwendung in einem Mehrschichtaufbau, einem Laminat, oder einem anderen Produkt oder Bauteil.

Im Sinne dieser Offenbarung ist es nicht ausgeschlossen, die durch physikalische Behandlung erhöhte Klebkraft auch bei einer Verklebung auf weichen, elastischen oder selbstklebenden Substraten vorteilhaft zu nutzen. Dabei sind auch Laminate oder Mehrschichtaufbauten eines Haftklebebandes nicht ausgeschlossen, wenn die dadurch erhöhte Klebkraft zwischen den Schichten, messbar beispielsweise in einer Trennkraftprüfung, vorteilhaft ist.

Vorzugsweise basiert die Haftklebemassenschicht auf Naturkautschuk, Synthesekautschuk oder Polyurethanen, wobei vorzugsweise die Haftklebemassenschicht aus reinem Acrylat oder mehrheitlich aus Acrylat besteht.

Die Haftklebemasse kann zur Verbesserung der Klebeeigenschaften mit Klebrigmachern abgemischt sein.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅- oder C₉-Monomere), Terpenphenolharze, Polyterpenharze auf Basis von Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze. Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Typische Einsatzmengen sind 10 bis 100 Gewichtsteile bezogen auf Polymere der Klebemasse.

Zur weiteren Verbesserung der Kabelverträglichkeit kann die Klebmasseformulierung optional mit Lichtschutz- oder primären und/oder sekundären Alterungsschutzmitteln abgemischt sein.

Als Alterungsschutzmittel können Produkte auf Basis sterisch gehinderter Phenole, Phosphite, Thiosynergisten, sterisch gehinderter Amine oder UV-Absorber eingesetzt werden.

Bevorzugt eingesetzt werden primäre Antioxidantien wie zum Beispiel Irganox 1010 (Tetrakis-(methylene-(3,5=di-(tert)-butyl-4-hydrocinnamate))methan; CAS No. 6683-19-8 (sterisch gehindertes Phenol), BASF) oder Irganox 254, allein oder in Kombination mit sekundären Antioxidantien wie zum Beispiel Irgafos TNPP oder Irgafos 168.

Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelaton auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten. Die Menge des zugesetzten Alterungsschutzmittels beziehungsweise Alterungsschutzmittelpaketes sollte in einem Bereich zwischen 0,1 und 10 Gew.-%, bevorzugt in einem Bereich zwischen 0,2 und 5 Gew.-%, besonders bevorzugt in einem Bereich zwischen 0,5 und 3 Gew.-% bezogen auf den Gesamtfeststoffgehalt liegen.

Zur Verbesserung der Verarbeitungseigenschaften kann die Klebmasseformulierung weiterhin mit üblichen Prozesshilfsmitteln wie Entschäumern, Entlüftern, Netzmitteln oder Verlaufsmitteln abgemischt sein. Geeignete Konzentrationen liegen im Bereich von 0,1 bis zu 5 Gewichtsteilen bezogen auf die Feststoffe.

Füllstoffe (verstärkend oder nicht verstärkend) wie Siliciumdioxide (sphärisch, nadelförmig, plättchenförmig oder unregelmäßig wie die pyrogenen Silicas), Glas als Voll- oder Hohlkugeln, Mikroballons, Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf die Feststoffe.

Gerade Mikroballons sind bevorzugt, weil diese eine Schäumung der Klebemasse erlauben.

Eine Möglichkeit ist also ein einschichtiges beidseitig klebendes trägerloses Reinacrylatklebeband, in einem besonders einfachen Aufbau bestehend aus einer Schicht einer viskoelastischen Klebmasse (zum Beispiel nach Methode VP) mit einer Dicke von 300 µm. Dieses Klebeband ist auf einer Seite mit einer physikalischen Methode vorbehandelt, vorzugsweise eine indirekte Plasmabehandlung in Luft, und hat eine abgestufte Klebkraft. Diese Ausführung des Klebebandes und das Verfahren zu seiner Herstellung sind von geringster Komplexität, wobei das Klebeband eine Klebkraft hat welche höher liegt als durch rheologische Optimierung der Klebmasse zu erreichen wäre.

Besonders vorteilhaft ist die Behandlung beider Seiten mit einer physikalischen Methode, zur Optimierung auf die jeweiligen Verklebungssubstrate.

Besonders vorteilhaft ist auch die Herstellung eines solchen Klebebandes in einer Dicke größer als 1000 µm.

Eine Möglichkeit ist aber auch die Herstellung eines beidseitig klebendes dünneren Klebebandes aus einer konventionellen Acrylat-Klebemasse (zum Beispiel 50 g/m², nach Methode PA) ohne einen Träger, typischerweise als Transferklebeband bezeichnet. Dieses vorteilhafte Klebeband wird aus Lösemitteln auf einem Release-Liner beschichtet und vor der Applikation zur Steigerung der Klebkraft einseitig mit Plasma behandelt.

Eine weitere Möglichkeit ist aber auch die Herstellung eines einseitig klebenden Klebebandes mit einem Folien-Träger (zum Beispiel Klebmasseauftrag 50 g/m², nach Methode PA, auf einem 20 µm PET-Träger), welches vor Applikation zur Steigerung der Klebkraft einseitig mit Plasma behandelt wird.

Eine weitere Möglichkeit ist aber auch die Herstellung eines beidseitig klebenden Klebebandes mit einem Folien-Träger, welches beidseitig mit Klebmasse beschichtet ist (zum Beispiel Klebmasseauftrag 50 g/m², nach Methode PA). Dieses beidseitige klebende Klebeband wird ein- oder beidseitig mit Plasma zu Steigerung der Klebkraft behandelt, je nach gewünschter Optimierung der Klebkraft.

Eine weitere besondere Möglichkeit ist aber auch die Herstellung eines beidseitig klebenden Klebebandes mit einem Schaumstoff-Träger, welches beidseitig mit Klebmasse beschichtet ist (zum Beispiel Klebmasseauftrag 50 g/m², nach Methode PA). Dieses beidseitige klebende Schaumstoff-Klebeband wird ein- oder beidseitig mit Plasma zu Steigerung der Klebkraft behandelt, je nach gewünschter Optimierung der Klebkraft.

Das Klebeband kann aus mehreren Schichten laminiert werden, wobei ein oder mehrere Grenzflächen vor der Lamination der physikalischen Behandlung unterzogen werden, und danach eine physikalische Behandlung mindestens einer Klebmasseoberfläche des Klebebands stattfindet.

Das Haftklebeband kann auch ein Laminat von zwei oder mehr Schichten Haftklebemassen sein.

Erfindungsgemäß ist das Substrat, auf das die Haftklebemassenschicht verklebt werden soll, physikalisch durch Plasma vorbehandelt, wobei sich die Vorbehandlung des Substrats vorzugsweise von derjenigen der Klebmasse unterscheidet.

Das Verklebungssubstrat ist dabei das Substrat, auf das die Klebemasse verklebt wird, nämlich ein Untergrund aus Stahl oder ein anderes Metall oder Glas oder Keramik.

Das Klebeband kann ein oder mehrere Schichten aus Folien oder Schaumträgern enthalten.

Das Klebeband kann darüber hinaus ein oder mehrere funktionelle Schichten wie Sperrschichten, Schichten aus heißschmelzfähigem Material, oder anderen funktionellen Schichten enthalten.

Vorzugsweise beträgt die Gesamtdicke des Klebebandes mehr als 20 µm, besonders bevorzugt mehr als 100 µm, ganz besonders bevorzugt mehr als 200 µm.

Falls die Klebemasse aus Lösemittel oder als wässrige Dispersion aufgetragen wird, findet die physikalische Behandlung vorzugsweise nach einer Trocknung statt.

Weiter vorzugsweise findet die physikalische Behandlung sofort nach der Beschichtung der zu behandelnden Klebmasse statt.

Alternativ kann die Behandlung nach einer Reifezeit/zu einem späteren Zeitpunkt nach der Beschichtung der zu behandelnden Klebmasse erfolgen, insbesondere unmittelbar vor der Verklebung oder Weiterverarbeitung. Allerdings kann die Behandlung auch einige Zeit vor der Verklebung oder Weiterverarbeitung erfolgen
Weiter vorzugsweise hat sich als vorteilhaft erwiesen, wenn die Behandlung nach einiger Zeit wiederholt wird ("aufgefrischt").

### Prüfmethoden

### Prüfmethode 1 (Klebkraft Stahl 90°)

Die Bestimmung der Klebkraft Stahl erfolgt bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann.

Wenn nicht anders beschrieben, lagen die Muster auf einer 23 µm dicken und geätzten PET-Folie kaschiert vor, so dass die PET-Folie für die Zugprüfung eingespannt werden konnte. Die Verankerung der Klebmasse zur PET-Folie war stets so gut, dass nie Delamination von der PET-Folie beobachtet wurde.

Das Prüfmuster wurde auf den Stahluntergrund aufgebracht und anschließend mit einer 2 kg Rolle 5 mal mit einer Aufrollgeschwindigkeit von 10 m/min angepresst. Wenn nicht anders angegeben, erfolgte danach eine Lagerung von sieben Tagen bei 40 °C, mit anschließendem Rekonditionieren für eine Stunde im Prüfklima.

Für die Messung wurde die Stahlplatte in eine spezielle Halterung geschoben, die es ermöglicht das Muster in einem Winkel von 90° senkrecht nach oben abzuziehen. Die Klebkraftmessung erfolgte mit einer Zwick-Zugprüfmaschine. Die Messergebnisse sind in N/cm angegeben und sind gemittelt aus drei Messungen.

### Prüfmethode 2 (Klebkraft im T-Peel)

Die Bestimmung der Klebkraft im T-Peel erfolgt bei einem Prüfklima von 23 °C +/- 1 °C Temperatur und 50 % +/- 5 % rel. Luftfeuchte. Grundsätzlich wird ein zweischichtiger Verbund hergestellt, und die Klebkraft (oder Trennkraft) dieses Verbunds gemessen durch Abziehen in einer Geometrie, die von der Seite betrachtet einem liegenden "T" ähnelt.

Wenn nicht anders beschrieben, lagen die Klebmasse-Muster auf einer 23 µm dicken geätzten PET-Folie kaschiert vor, so dass die PET-Folie für die Zugprüfung eingespannt werden konnte. Die Verankerung der Klebmasse zur PET-Folie war stets so gut, dass nie Delamination von der PET-Folie beobachtet wurde. Wenn ein Substrat nicht klebend war wurde es direkt eingespannt.

Die zwei Substrate wurden von Hand zu zweischichtigen Mustern zusammenkaschiert, auf 20mm Breite zugeschnitten und anschließend mit einer 2 kg Rolle 5 mal mit einer Aufrollgeschwindigkeit von 10 m/min angepresst. Danach erfolgte eine Lagerung von sieben Tagen bei 40°C, mit anschließendem Rekonditionieren für eine Stunde im Prüfklima.

Für die Messung wurden beide Substrate in jeweils eine Klemmbacke einer Zwick-Zugprüfmaschine eingespannt, und das vom Substrat gebildete "T" von Hand unterstützt. Die Messergebnisse sind in N/cm angegeben und sind gemittelt aus drei Messungen.

### Glasübergangstemperatur

Die Bestimmung der statischen Glasübergangstemperatur erfolgt über Dynamische Differenzkalorimetrie nach DIN 53765. Die Angaben zur Glasübergangstemperatur T_{g} beziehen sich auf den Glasumwandlungstemperatur-Wert T_{g} nach DIN 53765:1994-03, sofern im Einzelfall nichts anderes angegeben ist.

### Molekulargewichte

Die Bestimmung des mittleren Molekulargewichtes M_{W} und der Polydisperistät D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 µm, 10³ Å (10⁻⁷ m), ID 8,0 mm x 50 mm verwendet. Zur Auftrennung wurden die Säulen PSS-SDV, 5 µm, 10³ Å (10⁻⁷ m), 10⁵ Å (10⁻⁵ m) und 10⁶ Å (10⁻⁴ m) mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

### Feststoffgehalt:

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

### K-Wert (nach FIKENTSCHER):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

### Herstellung beispielhafter Klebebänder

### Herstellung des beispielhaften viskoelastischen Polymers VP

Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/ Isopropanol (94:6) befüllt. Nach 45minütiger Durchleitung von Stickstoffgas unter Rühren wurde der Reaktor auf 58 °C hochgeheizt und 40 g AIBN hinzugegeben. Anschließend wurde das äußere Heizbad auf 75 °C erwärmt und die Reaktion konstant bei dieser Außentemperatur durchgeführt. Nach 1 h wurden erneut 40 g AIBN zugegeben und nach 4 h wurde mit 10 kg Aceton/Isopropanol-Gemisch (94:6) verdünnt. Nach 22 h Reaktionszeit wurde die Polymerisation abgebrochen und auf Raumtemperatur abgekühlt.

Dieses Polymer wurde dann in einem Hotmelt-Prozess mit üblichen Methoden weiterverarbeitet. Zusammengefasst wurde zuerst das Lösemittel bei Unterdruck in einem Aufkonzentrationsextruder entfernt (Restlösemittelgehalt ≤ 0,3 Gew.-%) und erhitzt. In einem Doppelschneckenextruder wurde ein Vernetzer- und Beschleunigersystem zugegeben, bestehend aus Pentaerythrittetraglycidether (Polypox® R16) und Triethylentetramin (Epikure® 925). Nach Compoundierung wurde das Hotmelt auf einem Prozessliner mittels 2-Walzenkalander beschichtet.

### Herstellung des beispielhaften Polyacrylathaftklebers PA

Ein für radikalische Polymerisationen konventioneller 100 L-Glasreaktor wurde mit 4,8 kg Acrylsäure, 11,6 kg Butylacrylat, 23,6 kg 2-Ethylhexylacrylat und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Die Reaktion wurde nach 24 h Reaktionszeit abgebrochen und auf Raumtemperatur abgekühlt. Anschließend wurde das Polyacrylat mit Uvacure® 1500 abgemischt, auf einen Feststoffgehalt von 30 % mit Aceton verdünnt und dann aus Lösung auf eine silikonisierte Trennfolie (50 µm Polyester) beziehungsweise auf eine 23 µm dicke geätzte PET-Folie beschichtet.

Im Folgenden soll die Erfindung anhand mehrerer Beispiele näher erläutert werden, ohne damit eine wie auch immer geartete Einschränkung hervorrufen zu wollen.

### Beispiele

### Beispiel 1

Beispielhaft wird im Folgenden ein einschichtiges trägerloses Klebeband beschrieben, dass durch Plasmabehandlung eine einseitig gesteigerte Klebkraft aufweist. Das beispielhafte Klebeband besteht aus einer harzfreien viskoelastischen ReinacrylatKlebmasse, hergestellt im Hotmeltverfahren (nach Methode VP).

Das so hergestellte Klebebandvorprodukt mit einer Dicke von 900 µm wird nach 14 Tagen auf einem Prozessliner liegend einer einseitigen Plasmabehandlung der offenen Seite unterworfen. Die Behandlung erfolgte mit einer Laboranlage FG5001 der Firma Plasmatreat mit einer Rotationsdüse RD1004 bei Verwendung von Druckluft mit einer Geschwindigkeit von 10m/min bei 10mm Abstand zum Substrat.

Anschließend wurden Teststreifen von 20 mm Breite und 25 cm Länge geschnitten und einer Klebkraftprüfung nach Methode 1 auf Stahl unterzogen. Die Klebkraft der offenen, Plasma-behandelte Seite betrugt 40 N/cm und es trat in der Prüfung ein kohäsives Versagen der Klebmasse auf. Die Klebkraft der abgedeckten, unbehandelten Seite betrugt 17 N/cm. Dies entspricht einem Verhältnis von 2,35, also einer Steigerung beziehungsweise Abstufung um 135 %.

### Beispiel 2

Ein Klebebandvorprodukt wird hergestellt wie in Beispiel 1. Das Klebebandvorprodukt wird einer Coronabehandlung (DBD an Luft, Firma Vetaphone) der offenen Seite unterworfen mit einer Dosis von 33 Wmin/m². Anschließend wurden Teststreifen von 20 mm Breite und 25 cm Länge geschnitten und einer Klebkraftprüfung nach Methode 1 auf Stahl unterzogen. Die Klebkraft der offenen, coronabehandelten Seite betrug 27 N/cm und es trat in der Prüfung ein adhäsives Versagen der Klebmasse auf. Die Klebkraft der abgedeckten, unbehandelten Seite betrug 17 N/cm. Dies entspricht einer Steigerung beziehungsweise Abstufung um 58%.

### Beispiel 3

Ein Klebebandvorprodukt wird hergestellt wie in Beispiel 1. Das Klebebandvorprodukt wird einer Plasmabehandlung (DBD, Firma Vetaphone) in N₂-Atmosphäre der offenen Seite unterworfen mit einer Dosis von 33 Wmin/m². Anschließend wurden Teststreifen von 20 mm Breite und 25 cm Länge geschnitten und einer Klebkraftprüfung nach Methode 1 auf Stahl unterzogen. Die Klebkraft der offenen, corona-behandelten Seite betrug 21 N/cm, und es trat in der Prüfung ein adhäsives Versagen der Klebmasse auf. Die Klebkraft der abgedeckten, unbehandelten Seite betrug 17 N/cm. Dies entspricht einer Steigerung beziehungsweise Abstufung um 23 %.

### Beispiel 4

Überraschenderweise kann auch bei sehr polaren Reinacrylat-Haftklebmassen aus Lösemittelbeschichtung eine weitere Steigerung der Klebkraft durch physikalische Behandlung beobachtet werden. Die beispielhafte Masse hat einen Anteil von einpolymerisierter Acrylsäure von 12 %, und dennoch kann ein weiteres Einbringen von polaren Gruppen durch eine physikalische Behandlung die Klebkraft steigern.

Die auf PET-Folie beschichtete Klebmasse (nach Methode PA, Auftrag 50 g/m²) wird auf der offenen Seite einer Corona-Behandlung an Luft mit einer Dosis von 33 Wmin/m² unterworfen. Nach der Behandlung hat die offene, behandelte Seite eine Klebkraft auf Stahl nach Methode 1 von 12,6 N/cm. Die abgedeckte, unbehandelte Seite hat eine Klebkraft von 9,1 N/cm. Dies entspricht einer Steigerung von 38 %.

## Patentansprüche

1. Verfahren zur Erhöhung der Klebkraft einer Haftklebemassenschicht, die eine obere und eine untere Oberfläche aufweist, wobei beide Oberflächen der Haftklebemassenschicht einer physikalischen Methode unterzogen werden, wobei die physikalische Methode gewählt wird aus der Gruppe Corona-Entladung oder Plasmabehandlung, wobei beide Oberflächen der Haftklebemassenschicht einer physikalischen Methode derart unterzogen werden, dass sich ungleiche Klebkräfte auf beiden Seiten einstellen, wobei zusätzlich das Substrat, auf das die Haftklebemassenschicht verklebt wird, physikalisch durch Plasma vorbehandelt ist, wobei das Substrat ein Untergrund aus Stahl oder ein anderes Metall oder Glas oder Keramik ist.

2. Verfahren nach Anspruch 1,
**dadurch gekennzeichnet, dass**
bei den physikalischen Methoden folgende reine oder Mischungen von Prozessgasen eine Behandlungsatmosphäre bilden: N₂, O₂, H₂, CO₂, Ar, He, Ammoniak, Ethylen, wobei zudem Wasserdampf oder andere flüchtige Bestandteile zugesetzt sein können.

3. Verfahren nach Anspruch 1 oder 2,
**dadurch gekennzeichnet, dass**
die physikalischen Methoden bei Normaldruck stattfinden.

4. Verfahren nach zumindest einem der vorherigen Ansprüche,
**dadurch gekennzeichnet, dass**
die physikalischen Methode eine Plasmabehandlung bei Atmosphärendruck ist oder bei einem Druck mit einer Abweichung von weniger als 10 % vom Atmosphärendruck.

5. Verfahren nach zumindest einem der vorherigen Ansprüche,
**dadurch gekennzeichnet, dass**
Haftklebemassenschicht basiert auf Naturkautschuk, Synthesekautschuk oder Polyurethanen, wobei vorzugsweise die Haftklebemassenschicht aus reinem Acrylat oder mehrheitlich aus Acrylat besteht.

6. Verfahren nach zumindest einem der vorherigen Ansprüche,
**dadurch gekennzeichnet, dass**
das Substrat, auf das eine Haftklebemassenschicht verklebt werden soll, physikalisch durch Plasma vorbehandelt ist, wobei sich die Vorbehandlung des Substrats von derjenigen der Klebmasse unterscheidet.

## Claims

1. Method for increasing the bond strength of a layer of pressure-sensitive adhesive (PSA) having a top and a bottom surface, both surfaces of the PSA layer being subjected to a physical method, the physical method being selected from the group consisting of corona discharge and plasma treatment, both surfaces of the PSA layer being subjected to a physical method in such a way as to produce unequal bond strengths on the two sides, the substrate to which the PSA layer is bonded additionally having been physically pretreated with plasma, the substrate being a steel substrate or a substrate made of another metal or of glass or ceramic.

2. Method according to Claim 1,
**characterized in that**
in the case of the physical methods a treatment atmosphere is formed by the following pure or mixtures of process gases: N₂, O₂, H₂, CO₂, Ar, He, ammonia, ethylene, it also being possible for steam or other volatile constituents to have been added.

3. Method according to Claim 1 or 2,
**characterized in that**
the physical methods take place at atmospheric pressure.

4. Method according to at least one of the preceding claims,
**characterized in that**
the physical method is a plasma treatment at atmospheric pressure or at a pressure with a deviation of less than 10% from atmospheric pressure.

5. Method according to at least one of the preceding claims,
**characterized in that**
the PSA layer is based on natural rubber, synthetic rubber, or polyurethanes, the PSA layer consisting preferably of pure acrylate or predominantly of acrylate.

6. Method according to at least one of the preceding claims,
**characterized in that**
the substrate to which a PSA layer is to be bonded has been physically pretreated with plasma, the pretreatment of the substrate differing from that of the adhesive.

## Revendications

1. Procédé pour l'augmentation du pouvoir adhésif d'une couche de masse autoadhésive, qui présente une surface supérieure et une surface inférieure, les deux surfaces de la couche de masse autoadhésive étant soumises à un procédé physique, le procédé physique étant choisi dans le groupe de la décharge corona et du traitement au plasma, les deux surfaces de la couche de masse autoadhésive étant soumises à un procédé physique de telle manière que des pouvoirs adhésifs différents sont réglées sur les deux faces, le substrat sur lequel la couche de masse adhésive est collée étant de plus prétraité physiquement au plasma, le substrat étant un support en acier ou un autre métal ou en verre ou en céramique.

2. Procédé selon la revendication 1, **caractérisé en ce que** les gaz de procédé suivants, purs ou en mélange, forment une atmosphère de traitement dans les procédés physiques : N₂, O₂, H₂, CO₂, Ar, He, ammoniac, éthylène, de la vapeur d'eau ou d'autres ingrédients volatiles pouvant par ailleurs être ajoutés.

3. Procédé selon la revendication 1 ou 2, **caractérisé en ce que** les procédés physiques ont lieu à pression normale.

4. Procédé selon au moins l'une quelconque des revendications précédentes, **caractérisé en ce que** le procédé physique est un traitement au plasma à pression atmosphérique ou à une pression présentant un écart de moins de 10% par rapport à la pression atmosphérique.

5. Procédé selon au moins l'une quelconque des revendications précédentes, **caractérisé en ce que** la couche de masse autoadhésive est à base de caoutchouc naturel, de caoutchouc synthétique ou de polyuréthanes, la couche de masse autoadhésive étant de préférence constituée purement d'acrylate ou principalement d'acrylate.

6. Procédé selon au moins l'une quelconque des revendications précédentes, **caractérisé en ce que** le substrat, sur lequel la couche de masse autoadhésive doit être collée, est prétraité physiquement au plasma, le prétraitement du substrat différant de celui la masse adhésive.
